**Europäisches Patentamt**

**European Patent Office**

**Office européen des brevets**

(19)

(11) Numéro de publication : **0 021 917**
**B1**

(12) **FASCICULE DE BREVET EUROPÉEN**

(45) Date de publication du fascicule du brevet :
13.07.83

(51) Int. Cl.³ : **H 04 L 11/20**

(21) Numéro de dépôt : **80400800.1**

(22) Date de dépôt : **04.06.80**

(54) **Concentrateur téléinformatique pour réseau de transmission et de commutation de données par paquets.**

(30) Priorité : **13.06.79 FR 7915742**

(43) Date de publication de la demande :
**07.01.81 Bulletin 81/01**

(45) Mention de la délivrance du brevet :
**13.07.83 Bulletin 83/28**

(84) Etats contractants désignés :
**DE GB IT NL**

(56) Documents cités :
**FR A 2 310 051**
**FR A 2 331 221**
**US A 3 766 322**

**THE POST OFFICE ELECTRICAL ENGINEER'S JOURNAL, vol. 70, no. 4, 1978 LONDRES (GB) KELLY et al. : « The telecommunications network for EURONET », pages 208 à 216**

**PROCEEDINGS OF THE THIRD INTERNATIONAL CONFERENCE OF COMPUTER COMMUNICATION, 3 à 6 août 1976 Edité par PRAMODE K. VERMA NAKAMURA et al. : « Some design aspects of a public packet switched network », pages 317 à 322**

**PROCEEDINGS COMPUTER COMMUNICATIONS NETWORKS, 5 à 8 septembre 1978, WASHINGTON (US) FOLTS : « Interface standards for public data networks », pages 246 à 252**

(73) Titulaire : **Etablissement Public de Diffusion dit "Télédiffusion de France"**
**21-27, rue Barbès**
**F-92120 Montrouge (FR)**

**Bordry, Hervé**
**15, rue Jean Richepin**
**F-35000 Rennes (FR)**

**Layec, Hervé**
**50, rue Papu**
**F-35000 Rennes (FR)**

**L'Hostis, Jean-Claude**
**L'Erable**
**F-35230 Saint-Erblon (FR)**

(72) Inventeur : **Bordry, Hervé**
**15, rue Jean Richepin**
**F-35000 Rennes (FR)**
Inventeur : **Layec, Hervé**
**50, rue Papu**
**F-35000 Rennes (FR)**
Inventeur : **L'Hostis, Jean-Claude**
**L'Erable**
**F-35230 Saint-Erblon (FR)**

(74) Mandataire : **Le Guen, Louis François**
**13, rue Emile Bara BP 91**
**F-35802 Dinard Cedex (FR)**

## Concentrateur téléinformatique pour réseau de transmission et de commutation de données par paquets

La présente invention concerne un concentrateur téléinformatique permettant d'établir des liaisons entre, d'une part, une pluralité de terminaux téléinformatiques asynchrones et, d'autre part, une voie téléinformatique bidirectionnelle d'un réseau de transmission et de commutation de données par paquets.

Dans la description qui va suivre, on se référa plus particulièrement au cas où le réseau de transmission et de commutation de données par paquets est le réseau public français « TRANSPAC » qui est notamment décrit dans la revue française « Télécommunications » N° 30, janvier 1979, pages 31 à 37, et dans une plaquette « TRANSPAC » éditée en septembre 1976. Par ailleurs, on supposera que l'interface entre le concentrateur téléinformatique et la voie téléinformatique du réseau est conforme à l'Avis provisoire X25 pour les services de transmission de données avec commutation par paquets émis par le CCITT. On supposera également que les terminaux téléinformatiques reliés au concentrateur sont des terminaux asynchrones dont les interfaces sont conformes aux Avis de la série V émis par le CCITT. Toutefois, il faut bien comprendre que le concentrateur téléinformatique suivant l'invention peut être utilisé avec d'autres réseaux de commutation par paquets ou d'autres types de terminaux.

Un concentrateur téléinformatique de ce type a déjà été décrit dans une contribution aux conférences « EUROMICRO » tenues à Amsterdam, Pays-Bas, en octobre 1977, intitulée « Microprocessors and Packet Switching Networks » par H. Layec et J.C. L'Hostis. Dans le concentrateur, on prévoit un programme d'assemblage et de désassemblage qui permet, d'une part, de construire les paquets avec les caractères émis par un terminal asynchrone et vice versa, et, d'autre part, d'interpréter les dialogues de signalisation. On rappelle que, à partir des données de signalisation, il est possible d'établir ou de couper les communications ainsi que de modifier certains paramètres propres au terminal, écho, longueur de la ligne de liaison, parité, etc. En fait, ce concentrateur connu avait des performances limitées du fait de l'utilisation d'un coupleur HDLC (High Level Data Link Control ISO 3309) en mode programmé requérant fréquemment les services du micro-processeur. Le nombre de terminaux asynchrones desservis était obligatoirement faible en raison de la présence d'une seule ressource microprocesseur pour l'ensemble du concentrateur. Le nombre de circuits LSI (Large Scale Integration) très intégrés utilisés dans le coupleur étant faible, son prix de revient était très important.

Un objet de la présente invention consiste à prévoir un concentrateur téléinformatique qui, par rapport au concentrateur connu ci-dessus, offre les avantages d'un prix de revient sensiblement diminué et d'une augmentation de la souplesse et des performances.

Suivant une caractéristique de la présente invention, il est prévu un concentrateur téléinformatique pour établir des liaisons entre une pluralité de terminaux téléinformatique asynchrones et une voie téléinformatique bidirectionnelle d'un réseau de transmission et de commutation de données de paquets, comprenant une unité de traitement de fonction asynchrone reliée aux terminaux téléinformatiques, une unité de traitement de fonction normalisée X25 reliée à la voie téléinformatique bidirectionnelle, avec, entre les deux unités de traitement, un système de communication comprenant une unité de mémoire comportant une première partie dans laquelle chaque paquet transmis dans un sens ou dans l'autre est emmagasiné, une seconde partie composée de paires de cellules aller et retour, chaque cellule étant prévue pour pouvoir emmagasiner un en-tête local d'un paquet en cours de transfert dans le système de communication, chaque en-tête local contenant l'adresse du paquet emmagasiné dans la première partie de l'unité de mémoire, sa longueur et une information de type de paquet dont la lecture sert à déterminer dans l'unité de traitement qui la lit, le traitement approprié pour le paquet correspondant, chaque liaison entre un terminal et la voie bidirectionnelle faisant intervenir un couple sélecté de paires de cellules, chaque paquet étant emmagasiné dans une place disponible de la première partie de l'unité de traitement qui introduit ce paquet dans la mémoire inscrivant un en-tête local correspondant dans la cellule aller de la paire de cellules du couple qui lui est affectée, puis transférant cet en-tête local dans la cellule retour de l'autre paire du couple affectée à l'unité devant sortir le paquet de l'unité de mémoire quand cette cellule est disponible ce qu'indique une valeur particulière de l'information de type de paquet.

Suivant une autre caractéristique, l'unité de mémoire comprend une troisième partie dans laquelle s'inscrivent les identités de couples de cellules utilisés, chaque couple indiquant une communication entre deux paires de cellules, cette troisième partie jouant le rôle d'une matrice de communication.

Suivant une autre caractéristique, chaque unité de traitement est un microordinateur comportant un microprocesseur capable d'envoyer soit l'une vers les terminaux informatiques, soit l'autre vers la voie bidirectionnelle, des paquets ou messages normalisés ou vice versa de les recevoir, chaque microprocesseur pouvant écrire ou lire dans l'unité de mémoire, avec une procédure évitant les doubles prises.

Les caractéristiques de la présente invention mentionnées ci-dessus, ainsi que d'autres, apparaîtront plus clairement à la lecture de la description suivante d'un exemple de réalisation, ladite description étant faite en relation avec les dessins joints, parmi lesquels :

la Figure 1 est un schéma bloc général d'un concentrateur téléinformatique suivant l'invention,

la Figure 2 est un bloc-diagramme plus détaillé de l'interface du concentrateur qui est en relation avec une voie téléinformatique bidirectionnelle d'un réseau de commutation de paquets,

la Figure 3 est un bloc-diagramme plus détaillé de l'interface du concentrateur qui est en relation avec les terminaux téléinformatiques asynchrones,

la Figure 4 est un bloc-diagramme du système de communication entre les interfaces des Fig. 2 et 3, et

la Figure 5 est un schéma illustrant le dialogue entre les entrées et les sorties du système de communication de la Fig. 4.

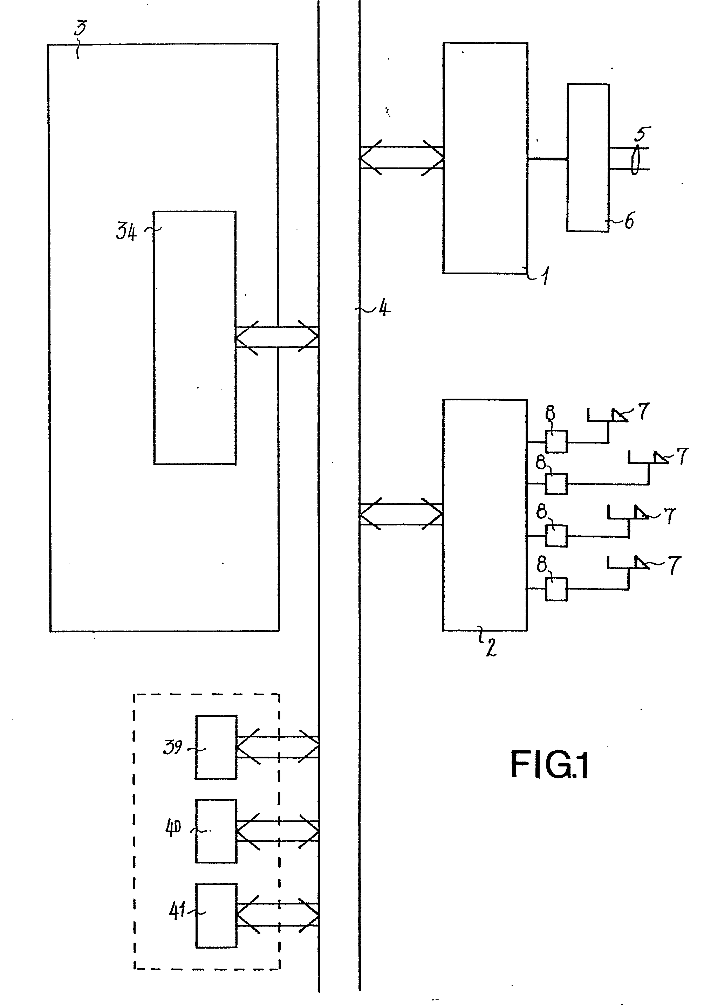

Suivant le schéma de la Fig. 1, le concentrateur comprend un microordinateur 1 exécutant ce que l'on appelle dans la suite la « FONCTION X25 », c'est à dire qu'il est chargé de la procédure telle qu'elle est décrite dans l'Avis X25 du CCITT mentionné plus haut, un microordinateur 2 exécutant ce que l'on appelle dans la suite la « FONCTION ASYNCHRONE », c'est à dire qu'il est chargé de la gestion des terminaux asynchrones et de l'analyse des ordres provenant des terminaux, et un système de communication 3 qui permet aux microordinateurs 1 et 2 d'échanger des informations. Entre les éléments 1, 2 et 3 est prévu un bus 4.

Le microordinateur 1 est relié à la voie téléinformatique bidirectionnelle 5 d'un réseau de commutation par paquets, que l'on supposera dans la suite être un réseau TRANSPAC défini plus haut, par un modem 6 conforme aux Avis V28 ou V35 du CCITT. Le microordinateur 2 peut être relié aux terminaux téléinformatiques asynchrones 7 par des modems de transmission asynchrones 8, conforme aux avis de la série V du CCITT.

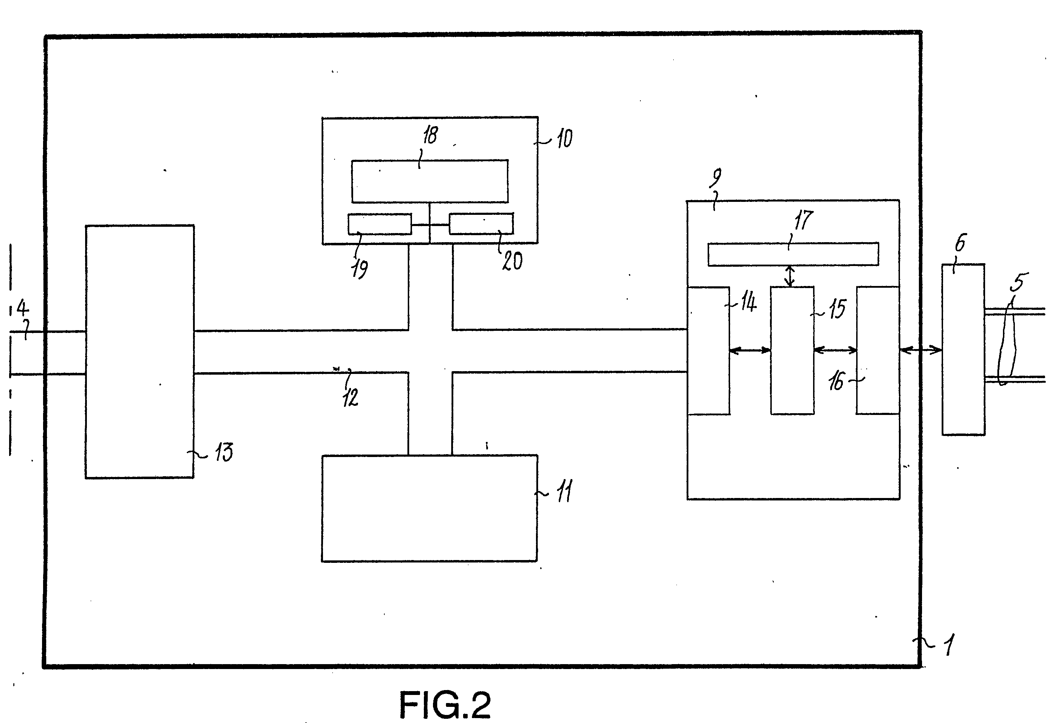

Le microordinateur 1 de la Fig. 2 comprend un coupleur de transmission asynchrone 9 fontionnant en mode duplex intégral, un système microprogrammé 10, une mémoire de trame 11 et un bus local 12, avec un système de connexion 13 entre le bus 12 et le bus 4. Le coupleur 9 comporte un dispositif d'accès direct à la mémoire 14, un dispositif de synchronisation 15, un interface 16 vers le modem 6, et un dispositif de requêtes prioritaires 17. Le coupleur 9 fonctionne conformément au protocole HDLC ou procédure de commande de chaînon à haut niveau définie par l'Organisation internationale de normalisation (ISO), dans les documents de référence suivants : IS 3309, IS 4335 et les modifications approuvées (TC 97/SC6/N 1 300 ET 1 445) et DP 6256. Le dispositif de synchronisation 15 est un boîtier HDLC, bien connu, qui assure la synchronisation de la voie 5 en effectuant les opérations suivantes : émission et réception de drapeaux, insertion et extraction des zéros dans le message, calcul et contrôle du code de redondance cyclique CRC (ou en anglais FCS, Fram Check Sequence).

Le système microprogrammé 10 comporte la mémoire de programme du processeur 18, une horloge 19 et un système d'interruption par requêtes prioritaires 20. Il se charge de réaliser la procédure X25. On doit comprendre que le programme du système 10 est un programme de type connu qui est déjà utilisé dans les réseaux de commutation de paquets, tels que le réseau TRANSPAC en France, le réseau DATAPAC au Canada et le réseau TELENET aux Etats-Unis. Il est donc inutile de décrire plus en détail un tel programme.

La mémoire de trame 11 contient tous les paramètres nécessaires à la numérotation et à l'acquittement des trames. Ces paramètres sont mis à chaque émission ou réception de trame. La mémoire 11 contient aussi un certain nombre de trames dont le format est fixe : SARM, UA, DISC, etc., dont les définitions sont données dans l'Avis X25 du CCITT, paragraphes 2,3,4.

Dans le microprocesseur 1, la détection et la récupération des erreurs sont assurées par le système microprogrammé 10 qui assure également la conservation de l'ordre des paquets et le contrôle de flux.

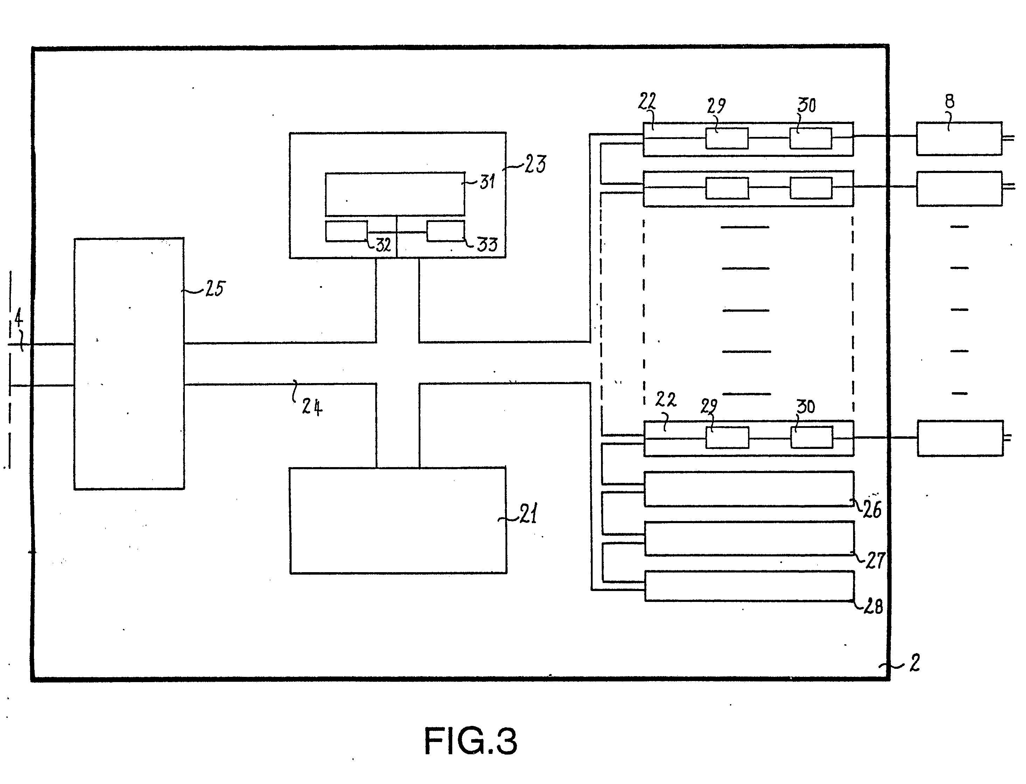

Le microordinateur 2 de la Fig. 3 comprend une mémoire tampon 21, des coupleurs asynchrones 22, un système programmé 23 et un bus local 24 avec des systèmes de connexion 25 entre le bus 24 et le bus 4. Dans l'exemple décrit, on a supposé que le microordinateur 2 comprend huit coupleurs asynchrones donnant chacun accès à un terminal 7 par un modem 8.

La mémoire tampon 21 comprend deux tampons circulaires par terminal 7.

Les coupleurs asynchrones 22 ont en commun une logique de reconnaissance de vitesse 26, une logique de supervision de modem 27 et une logique de requêtes prioritaires 28. Chaque coupleur 22 est constitué par un coupleur asynchrone intégré classique 29 et un circuit d'interface convertisseur de niveaux électriques 30.

Le système programmé 23 est constitué d'une mémoire de programme processeur 31, une horloge 32 et un système d'interruption par requêtes prioritaires 33. A une fréquence dépendant de la vitesse des terminaux, l'horloge 32 provoque une interruption vers le processeur 31 qui lit le caractère alors présent dans le coupleur 29 correspondant et le range dans le tampon circulaire correspondant. En différé, le processeur 31 analyse tous les caractères admis dans la mémoire 21 à deux tampons circulaires pour former les ordres de provenance du terminal et les paquets correspondants à destination du système de communication 3, ceci dans le sens réception de données provenant du terminal. Dans le sens émission vers le terminal, les paquets reçus du système de communication 3 sont analysés et leur contenu rangé dans le tampon circulaire émission correspondant.

Le système de connexion 12-25 entre les bus locaux et le bus 4 est un des nombreux modules de liaison classiquement connus qui permettent de raccorder un certain nombre de microordinateurs sur une même mémoire commune grâce à une gestion appropriée des requêtes et des priorités. A titre d'exemple, un module de ce genre peut être le module commercialisé par la société américaine INTEL Corporation sous les Nᵒˢ. 8218/8219, intitulé « Bipolar Microcomputer Bus controller MCS-80 and MCS-85 Families ».

Le système de communication 3 se compose essentiellement d'une mémoire de stockage 34.

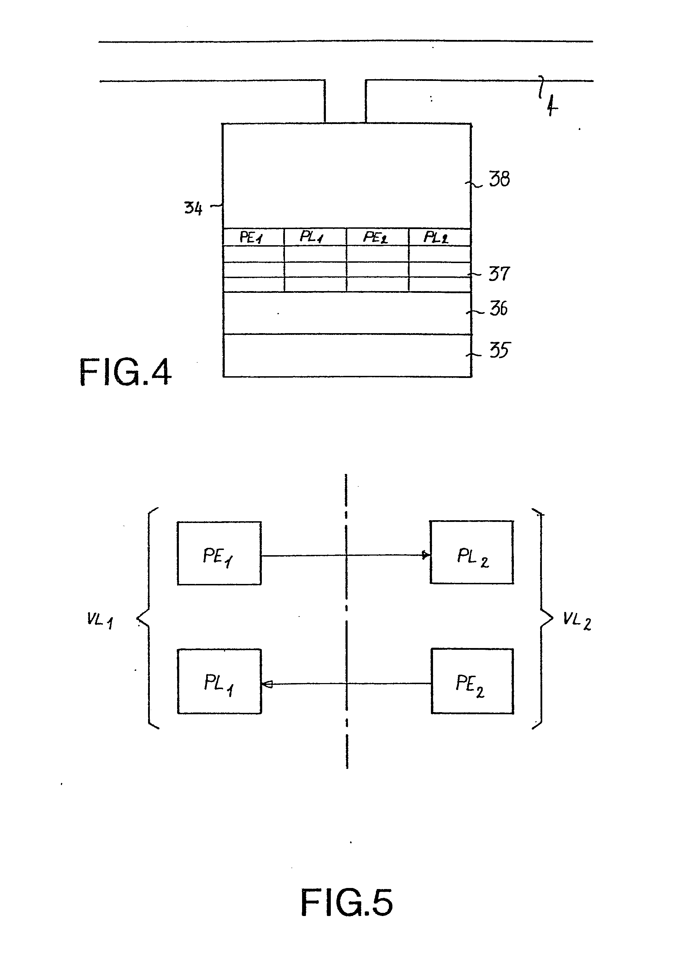

Dans la mémoire 34, Fig. 4, on peut distinguer une première zone 35 qui est la mémoire morte qui contient un numéro NUMRES et une table d'identification des voies logiques, une seconde zone 36 qui est une mémoire vive dans laquelle s'inscrit la matrice de connexion du système, une troisième zone 37 qui est une mémoire vive constituée par autant de paires de cellules que de voies logiques, chaque cellule étant prévue pour pouvoir emmagasiner un en-tête, et une quatrième zone 38 qui est prévue pour pouvoir emmagasiner la partie information des paquets.

Le bus 4 réalise l'interconnexion entre les microprocesseurs 1 et 2 et la mémoire 34. Il comprend les lignes suivantes :

— lignes de données formant le bus de données,

— lignes d'adresses formant le bus d'adresses, qui sert à adresser la mémoire 34, ces lignes étant au nombre de 16

— lignes de contrôle de fonctionnement des multiprocesseurs 1 et 2.

En effet, la mémoire 34 et le bus 4 pouvant être requis simultanément par les microprocesseurs 1 et 2, les conflits d'accès sont résolus par un système de priorité série, une horloge de bus étant utilisée pour analyser toutes les demandes au même moment.

Les signaux de contrôle multiprocesseur nécessaires sont :

— HORLOGE BUS

— DEMANDE DE BUS

— BUS OCCUPE

— BUS LIBRE pour l'ENTREE d'informations

— BUS LIBRE pour la SORTIE d'informations.

Avec une horloge fonctionnant, par exemple, à 10 MHz et une mémoire de stockage classique 34 du type MOS à 400 nanosecondes de temps d'accès, le débit du système de communication 3 est d'environ 8 Meb/s, les conflits d'accès étant résolus.

La description précédente du BUS de 4 montre qu'il s'agit d'un bus classique d'ordinateur dont on a soustrait les deux lignes de contrôle, LECTURE périphérique et ECRITURE périphérique.

Chaque microordinateur FONCTION X25 1 ou FONCTION ASYNCHRONE 2 est, au cours d'une communication, vu par le système de communication 3, par l'intermédiaire des cellules de la zone 37 de la mémoire 34.

Une communication, appelée aussi circuit virtuel, est une association entre deux voies logiques, c'est à dire entre deux paires de cellules 37, avec une voie logique affectée au microordinateur 1 et l'autre voie logique affectée au microordinateur 2. Il y a bien entendu autant de voies logiques VL, qui peuvent être affectées à 2, que de terminaux desservis par 2.

Dans un circuit virtuel, l'échange d'informations est possible entre les deux voies logiques dans les deux sens de transmission, avec un débit asservi aux flux d'informations à écouler. La communication peut être libérée à tout moment.

L'échange d'information est effectué sous la forme de paquets qui ont la composition suivante :

— un bloc d'informations qui contient au maximum 32 octets dans l'exemple choisi,

— un en-tête qui contient

l'adresse du bloc d'information (2 octets)

la longueur utile du bloc d'information (1 octet). Le type du paquet (1 octet) soit au total un en-tête de quatre octets.

A titre d'exemple, les types de paquets possibles sont :

— 0 : paquet inexistant,

— 1 : paquet de données,

— 2 : paquet d'appel ou demande d'ouverture de circuit virtuel CV (APP)

— 3 : paquet de confirmation d'ouverture de CV (COM),

— 4 : paquet de demande de fermeture de CV ou libération (LIB),

— 5 : paquet de confirmation de fermeture de CV (CLIB).

La Fig. 5 illustre le dialogue entre deux voies logiques VL1 et VL2 correspondant à l'ensemble de portes 13 et l'autre à l'ensemble de portes 25. Chaque voie logique VL1 ou VL2 dispose en permanence de deux cellules, l'une PE1 ou PE2 pour l'écriture et l'autre PL1 ou PL2 pour la lecture. Le microordinateur correspondant 1 ou 2 peut écrire de l'information dans PE1 ou PE2 et en lire dans PL1 ou PL2.

Le fonctionnement est le suivant. On suppose que le microordinateur 1, chargé de la gestion de VL1, a transmis un paquet à la mémoire 34. En pratique, la transmission de 1 à 34 consiste à faire emmagasiner le bloc d'informations du paquet dans une place de mémoire de la zone 38 de 34 et à faire emmagasiner dans la cellule PE1 l'en-tête correspondant à ce paquet dans cette opération. On rappelle que cet en-tête contient l'adresse de la place où est emmagasiné le bloc d'informations et sa longueur, ainsi qu'un 1 indiquant que l'en-tête se rapporte à un paquet de données existant. Quand le microordinateur 1 juge utile de fournir le paquet au microordinateur 2, il lit, dans la cellule PL2, l'octet type de l'en-tête qui y est stocké. Si la valeur de cet octet type est 0, le microordinateur 1 fait recopier dans la cellule PL2, l'en-tête se trouvant dans la cellule PE1. En effet, l'octet type 0 indique l'inexistence d'un paquet. Si la valeur de cet octet type est 1, cela signifie que le microordinateur 2 chargé de la gestion de PL2 n'a pas terminé le traitement du paquet transmis précédemment. Le microordinateur 1 peut alors effectuer une autre tâche à charge pour lui de venir voir de temps en temps la valeur de l'octet type dans PL2.

Il importe que la recopie de l'en-tête de PE1 dans PL2 se termine par la recopie de l'octet type pour que l'acquisition de l'en-tête emmagasinée dans PL2 par le microordinateur 2 fasse ressortir les informations, telles que adresse du bloc d'informations correspondant dans la zone 38 et longueur de ce bloc.

Dans le sens inverse de VL2 à VL1, l'échange de paquets se fait de la même façon, en inversant les rôles des microordinateurs.

Etant donné le rôle du concentrateur téléinformatique, qui est de donner aux terminaux qui lui sont reliés un accès au réseau TRANSPAC ou à un réseau de ce type, ou vice versa, le concentrateur reçoit, comme tout équipement raccordé au réseau, un numéro réseau NUMRES. Chaque terminal raccordé à ce concentrateur reçoit aussi un numéro propre qui se compose du NUMRES du concentrateur plus un sous-numéro, en général à un ou deux chiffres. Dans le concentrateur, on peut supposer que le sous-numéro 00 est réservé à la voie téléinformatique 5 vers le réseau TRANSPAC.

Dans la zone 35 de la mémoire 34, est inscrite la configuration de concentrateur, c'est à dire :
— le numéro NUMRES du concentrateur
— une table identifiant les voies logiques affectées à la voie informatique 5, vers le réseau TRANSPAC.

Dans la zone 36, est inscrite la matrice de connexion qui donne, à tout instant, les correspondances entre les voies logiques VL qui sont en communication.

Quand le microordinateur 2, chargé de la gestion d'une voie logique VL2 correspondant à un terminal, veut établir une communication demandée par ce terminal avec un correspondant de numéro NUMCO, il forme un paquet d'appel en inscrivant dans la partie bloc d'informations le numéro du correspondant NUMCO, suivi du numéro associé à la voie logique VL2 appelante et dans PE1 un en-tête de type 2. Puis il compare les numéros NUMCO et NUMRES. Si les deux numéros ne coïncident pas, il en déduit que le correspondant est étranger aux terminaux desservis par le concentrateur et le microordinateur 2 cherche une voie logique VL1 libre parmi celles qui sont affectées à la voie téléinformatique 5. Si, au contraire, tous les éléments binaires composant NUMRES se retrouvent dans le numéro NUMCO, la partie restante de NUMCO, c'est à dire le sous-numéro, détermine la voie logique VL1 affectée au correspondant demandé qui fait partie des terminaux desservis par le concentrateur.

Deux cas peuvent alors se produirent. Premièrement, la voie VL1 ainsi déterminée est libre ; le microordinateur 3 inscrit alors dans PL1, de cette voie, l'en-tête de PE2 de VL2 et effectue le marquage de la connexion VL2-VL1 correspondante dans la matrice de connexion de la zone 36. Si aucune voie logique VL1 libre ne peut être trouvée, soit que la voie vers le terminal appelé est déjà en état de connexion, soit que toutes les voies affectées à la ligne 5 sont en état de connexion, le microordinateur 2 transmet au terminal appelant l'information « connexion impossible ».

Dans le cas où la connexion peut être établie, ce qu'indique alors la consultation de la matrice de connexion, le microordinateur 1 en prend connaissance, en lisant l'en-tête contenu dans PL1 ; puis en lisant le bloc d'informations associé, il prend connaissance de la communication demandée puisque ce bloc comprend le numéro NUMCO ; il peut alors accepter la communication en renvoyant vers le microordinateur 2 par PE1 et PL2 un paquet de confirmation d'ouverture de circuit virtuel, dit paquet COM, qui se distingue par un octet de valeur 3 ; ou encore, il peut refuser la communication en renvoyant, de la même manière, un paquet de demande de fermeture de circuit virtuel, dit paquet LIB, avec un octet type de valeur 4.

Dans ce dernier cas, le microordinateur 2 transmet au terminal appelant l'information « connexion impossible » et au microordinateur 1 le paquet de confirmation de fermeture de circuit virtuel, dit paquet CLIB, avec un octet type de valeur 5.

A la fin d'une communication, la coupure du circuit virtuel établi entre deux voies logiques VL1 et VL2 s'effectue simplement par l'échange de paquets LIB et CLIB et s'accompagne de la mise à jour correspondante de la matrice de connexion.

Dans le système de communication 3 du concentrateur, la matrice de connexion de la zone 36 est unique et un seul des deux microordinateurs peut y accéder à un instant donné. En conséquence, on prévoit la matrice de connexion protégée par un mécanisme bien connu de type « TEST and SET ».

Avant de donner un exemple de diagramme des temps d'une communication, on va décrire ci-après les fonctionnements des microordinateurs FONCTION X25 et FONCTION ASYNCHRONE.

Périodiquement, le système microprogrammé 10 teste les différentes cellules PL en lisant dans chaque en-tête la valeur de l'octet type. Si la valeur d'un octet type est trouvée différente de zéro, il fournit au dispositif d'accès direct 14 l'adresse et le nombre d'octets du paquet à émettre, le dispositif 14 étant capable de lire directement dans la mémoire 34. Il donne ensuite un ordre « départ émission » au dispositif de synchronisation HDLC 15. L'émission se déroule alors vers la liaison 5 suivant la procédure X25, qu'il est inutile de redécrire ici.

Lorsque la trame X25, correspondant au paquet concerné, a été émise totalement, y compris la séquence de contrôle de trame FCS, le dispositif de synchronisation HDLC 15 provoque une requête prioritaire, par le dispositif 17, vers le système d'interruption 20 du système microprogrammé 10, qui fournit éventuellement une nouvelle trame à émettre.

Dans le sens réception, le système microprogrammé 10 fournit au dispositif d'accès direct 14, l'adresse d'écriture dans 34, avec une longueur maximale. En fin de réception de trame, y compris la séquence de contrôle de trame FCS, le dispositif HDLC 15 adresse, par 17 et 20, une requête prioritaire au système microprogrammé 10 afin que celui-ci analyse les octets d'en-tête de la trame reçue.

Indépendamment du transport de l'information, le système microprogrammé 10 est capable d'assurer la supervision du modem 6 en agissant sur le circuit d'interface 16.

Dans le microordinateur FONCTION ASYNCHRONE, à une fréquence dépendant de la vitesse des terminaux, l'horloge 32 provoque une interruption dans le système programmé 23 qui lit le caractère présent sur un coupleur asynchrone 29 et le range dans le tampon circulaire correspondant de la mémoire 21. En différé, le système programmé 23 analyse tous les caractères admis dans la mémoire 21 pour former les ordres en provenance du terminal concerné et les paquets correspondants à destination du système de communication 3.

Dans le sens émission vers le terminal, les paquets reçus sont analysés et leurs contenus rangés dans la mémoire tampon 21, et plus particulièrement dans le tampon émission de cette mémoire.

Dans la description qui précède, on a successivement développé le fonctionnement du système de communication 3, puis celui du microordinateur FONCTION X25 et, enfin, celui du microordinateur FONCTION ASYNCHRONE 2.

On va maintenant décrire, à titre d'exemple, la succession normale des signaux échangés à travers le concentrateur lors d'une communication.

Dès qu'un appel apparaît sur une ligne asynchrone reliée à un modem 8, la logique de supervision de modem 27 détecte l'apparition d'une porteuse et, par la logique de requêtes prioritaires 28, fait émettre une interruption vers le système d'interruptions 33 du système programmé 23 pour demander l'attribution de la logique de reconnaissance de vitesse 26 au terminal qui appelle. La logique de reconnaissance de vitesse 26 compte le temps qui sépare deux fronts descendants sur un caractère bien prévu, qui est classiquement le caractère V, et peut donc reconnaître une vitesse parmi huit entre 110 et 9 600 éléments binaires par seconde.

Dès que la vitesse est reconnue, la logique de reconnaissance de vitesse 26 transmet au système programmé 23 un signal « fin de reconnaissance de vitesse ». Ce signal signifie que la ressource « reconnaissance de vitesse » 26, unique des coupleurs asynchrones 22, peut être attribuée à un autre terminal. Le système programmé 23 fait transmettre au terminal appelant un message d'accusé de réception d'appel, soit par exemple « LIGNE ACTIVE BONJOUR ». Par ailleurs, le système 23 va dorénavant « scruter » ce terminal, à la fois sur requête de l'horloge 32 et en différé.

Le terminal appelant transmet le numéro NUMCO de l'appelé, ce qui déclenche, comme on l'a vu ci-dessus, l'envoi d'un paquet d'appel de type 2 vers le microordinateur FONCTION X25, qui, on le suppose, accepte la communication et renvoit donc vers le microordinateur FONCTION ASYNCHRONE un paquet COM de type 3. Ces échanges de paquets se font à travers le système de communication 3.

Puis, le microordinateur FONCTION X25 transmet, par le modem 6 et la liaison 5, un paquet d'appel à travers le réseau TRANSPAC, vers l'appelé.

Plus tard, l'appelé répond en envoyant un message qui est reçu par 1, qui le retransmet à 2, par 3, et 2 l'envoie au terminal appelant. Le paquet traversant 3 est alors un paquet de type 1.

La communication est alors établie et les paquets de type 1 s'échangent dans les deux sens en full duplex.

A la fin de la communication, on suppose que le terminal appelant rompt la communication et, à cet effet, il transmet un message de déconnexion qui se traduit à travers 3 par un message de type 4 (CLIB).

Le microordinateur FONCTION X25 renvoie vers 2 un paquet de type 5 (CLIB) et, par ailleurs, à travers le réseau TRANSPAC, transmet le message de déconnexion vers l'appelé.

En pratique, le message de déconnexion du terminal vers 2 peut être la disparition de la porteuse, ce qui entraîne la fin de la scrutation de ce terminal par 23.

Dans une variante, on substitue à la logique de reconnaissance de vitesse 26 un jeu de connexions fixes pour donner une vitesse fixe à chacune des voies asynchrones.

A la Fig. 1, on a encore représenté en 39, 40 et 41 un processeur, une mémoire de programme et un périphérique qui ont accès au bus 4 et auxquels peuvent être attribués dans la mémoire 34 des voies logiques leur permettant de communiquer avec les terminaux ou avec le réseau TRANSPAC.

**Revendications**

1. Concentrateur téléinformatique pour établir des liaisons entre une pluralité de terminaux téléinformatiques asynchrones (7) et une voie (5) téléinformatique bidirectionnelle d'un réseau de transmission et de commutation de données de paquets, comprenant une unité (2) de traitement de fonction asynchrone reliée aux terminaux téléinformatiques (7), une unité (1) de traitement de fonction normalisée X25 reliée à la voie (5) téléinformatique bidirectionnelle, caractérisé en ce qu'il comprend entre les deux unités de traitement (1, 2) un système de communication (3) comprenant une unité de mémoire (34) comportant une première partie (38) dans laquelle chaque paquet transmis dans un sens ou dans l'autre est emmagasiné, une seconde partie (37) composée de paires de cellules aller (PE) et retour (PL), chaque cellule (PE ou PL) étant prévue pour pouvoir emmagasiner un en-tête local d'un paquet en cours de transfert dans le système de communication, chaque en-tête local contenant l'adresse du paquet emmagasiné dans la première partie (38) de l'unité de mémoire, sa longueur et une information de type de paquet dont la lecture sert à déterminer dans l'unité de traitement (1 ou 2) qui la lit le traitement approprié pour le paquet correspondant, chaque liaison entre un terminal (7) et la voie (5) bidirectionnelle faisant intervenir un couple sélecté de paires de cellules, chaque paquet étant emmagasiné dans une place disponible de la première partie (38) de la mémoire à partir de l'unité de traitement (1 ou 2) qui introduit ce paquet dans la mémoire en inscrivant un en-tête local correspondant dans la cellule aller (PE) de la paire de cellules du couple qui lui est affectée, puis cet en-tête local étant transféré dans la cellule retour (PL) de l'autre paire du couple affectée à l'unité devant sortir le paquet de l'unité de mémoire quand cette cellule est disponible ce qu'indique une valeur particulière de l'information de type de paquet.

2. Concentrateur téléinformatique suivant la revendication 1, caractérisé en ce que l'unité de mémoire (34) comprend une troisième partie (36) dans laquelle s'inscrivent les identités de couples de cellules utilisées, chaque couple indiquant une communication entre deux paires de cellules, cette troisième partie jouant le rôle d'une matrice de communication.

3. Concentrateur téléinformatique suivant la revendication 2, caractérisé en ce que chaque unité de traitement (1 ou 2) est un microordinateur comportant un microprocesseur capable d'envoyer soit l'une vers les terminaux informatiques (7), soit l'autre vers la voie (5) bidirectionnelle, des paquets ou messages normalisés ou vice versa de les recevoir, chaque microprocesseur pouvant écrire ou lire dans l'unité de mémoire (34), avec une procédure évitant les doubles prises.

### Claims

1. Data network concentrator for establishing data communications between a plurality of asynchroneous data network terminals (7) and a two-way data channel (5) in a data packet transmission and switching network comprising an asynchroneous function processing unit (2) connected to the data network terminals (7), a X25 standard function processing unit connected to the two-way network channel (5), characterized in that it comprises between the two processing units (1, 2) a communication system (3) comprising a memory unit (34) including a first part (38) wherein each packet transmitted either in one way or the other is stored, a second part (37) comprised of pairs of to (PE) and fro (PL) cells, each cell (PE or PL) being arranged to be able to store a local header of a packet under transfer through the communication system, each local header containing the address of the packet stored in the first part (38) of the memory unit, its length and a packet type information the read-out of which is used to determine in the reading processing unit (either 1 or 2) the appropriate processing to be applied to the corresponding packet, each communication between a terminal (7) and the two-way channel (5) causing a selected couple of cells to intervene, each packet being stored in an available place of the first part (38) of the memory from the processing unit (either 1 or 2) which processing unit introduces the packet into the memory by writing a corresponding local header in the to-cell (PE) of the pair of cells of the assigned couple, then that local header being transferred into the fro-cell (PL) of the other pair of the couple assigned to the unit having to read-out the packet from the memory unit when the said cell is available which is indicated by a particular value of the packet type information.

2. Data network concentrator according to claim 1, characterized in that the memory unit (34) comprises a third part (36) wherein the identities of the used couples of cells are written, each couple indicating a communication between two pairs of cells, this third part acting as a communication matrix.

3. Data network concentrator according to claim 2, characterized in that each processing unit (1 or 2) is a microcomputer including a microprocessor capable of sending either from one to the data network terminals (7) or the other towards the two-way channel (3) packets or standard messages or vice versa receiving them, each microprocessor being able to write in or read out of the memory unit (34), with a procedure avoiding double seizures.

### Ansprüche

1. Fernmelde-Zentralstation zur Herstellung von Verbindungen zwischen einer Vielzahl von asynchronen Fernmeldeanschlüssen (7) und einem bidirektionalen Fernmeldeweg (5) eines Netzes zur Übertragung und zur Umschaltung von Datenpaketen und einer mit den Fernmeldeanschlüssen (7) verbundenen asynchron arbeitenden Verarbeitungseinheit (2) und einer mit dem bidirektionalen Fernmeldeweg verbundenen Verarbeitungseinheit (1) der genormten Funktion X25, dadurch gekennzeichnet, daß die Station zwischen den beiden Verarbeitungseinheiten (1, 2) ein Verbindungssystem (3) mit einer Speichereinheit (34) enthält, die einen ersten Teil (38), in dem jedes in der einen oder der anderen Richtung übertragene Paket gespeichert wird, und einen zweiten Teil (37) aufweist, der aus Paaren von Schreibzellen (PE) und Lesezellen (PL) zusammengesetzt ist, wobei jede Zelle (PE) oder (PL) im Laufe der Übertragung in dem Fernmeldesystem ein örtliches Kennsignal eines Paketes speichern kann und jedes örtliche Kennsignal die Adresse des in dem ersten Teil (38) der Speichereinheit gespeicherten Paketes, seine eigentliche Länge und eine Information über den Typ des Paketes enthält, dessen Lesen dazu dient, in der Verarbeitungseinheit (1) oder (2), die sie liest, die dem entsprechenden Paket zugeordnete Verarbeitungsart zu bestimmen, daß bei jeder Verbindung zwischen einem Anschluß (7) und dem bidirektionalen Weg (5) eine ausgewählte Kombination von Paaren der Zellen eingeschaltet wird, daß jedes Paket an einer verfügbaren Stelle des ersten Teiles (38) des Speichers von der Verarbeitungseinheit (1) oder (2) aus gespeichert wird, die dieses Paket in den Speicher eingibt, wobei ein entsprechendes örtliches Kennsignal in die Schreibzelle (PE) des Paares von Zellen der ihm zugeordneten Kombination eingeschrieben wird, daß dann das örtliche Kennsignal in die Lesezelle (PL) des anderen Paares der der Einheit zugeordneten Kombination übertragen wird, die das Paket aus der Speichereinheit ausgeben kann, sobald diese Zelle verfügbar ist, wodurch ein bestimmter Informationswert über den Typ des Paketes angezeigt wird.

2. Fernmelde-Zentralstation nach Anspruch 1, dadurch gekennzeichnet, daß die Speichereinheit (34) einen dritten Teil (36) enthält, in den die Identitätswerte der Kombination der benutzten Zellen eingeschrieben werden, wobei jede Kombination eine Verbindung zwischen zwei Paaren von Zellen anzeigt und der dritte Teil die Aufgabe einer Verbindungsmatrix ausübt.

3. Fernmelde-Zentralstation nach Anspruch 2, dadurch gekennzeichnet, daß jede Verarbeitungseinheit (1) oder (2) eine Mikro-Datenverarbeitungsschaltung mit einem Mikroprozessor aufweist, der von Paketen oder genormten Informationen entweder die eine an die Fernmeldeanschlüsse (7) oder die andere an den bidirektionalen Weg (5) führen oder sie umgekehrt empfangen kann, wobei jeder Mikroprozessor in der Speichereinheit (34) in einer Art schreiben oder lesen kann, bei der doppelte Proben vermieden werden.

FIG.1

FIG.2

FIG.3

34 —

38

| $PE_1$ | $PL_1$ | $PE_2$ | $PL_2$ |
|--------|--------|--------|--------|
|        |        |        |        |
|        |        |        |        |
|        |        |        |        |

— 37

— 36

— 35

# FIG.4

$VL_1$

| $PE_1$ | → | $PL_2$ |

| $PL_1$ | ← | $PE_2$ |

$VL_2$

# FIG.5